# EUROPÄISCHE PATENTSCHRIFT

(11) **EP 2 391 435 B1**
(45) Veröffentlichungstag und Bekanntmachung des Hinweises auf die Patenterteilung: **04.12.2013**
(21) Anmeldenummer: 10701558.8
(22) Anmeldetag: 01.02.2010
(51) Int. Cl.: B01D 53/14

(54) **ZYKLISCHE AMINE ENTHALTENDES ABSORPTIONSMITTEL ZUM ENTFERNEN SAURER GASE**
ABSORBING COMPOSITION COMPRISING CYCLIC AMINES FOR REMOVAL OF ACID GAS
ABSORBANT COMPRENANT DES AMINES CYCLIQUES POUR L'ELIMINATION DE GAZ ACIDE

(30) Priorität: 02.02.2009 EP 09151885; 29.04.2009 EP 09159104
(43) Veröffentlichungstag der Anmeldung: 07.12.2011
(73) Patentinhaber: BASF SE, 67056 Ludwigshafen (DE)
(72) Erfinder: GARCIA ANDARCIA, Hugo, Rafael, 68161 Mannheim (DE); LICHTFERS, Ute, 76187 Karlsruhe (DE); SIEDER, Georg, 67098 Bad Dürkheim (DE); SPUHL, Oliver, 68161 Mannheim (DE); BRUGHMANS, Steven, 67167 Speyer (DE)
(86) Internationale Anmeldenummer: PCT/EP2010/051204
(87) Internationale Veröffentlichungsnummer: WO 2010/086449

(56) Entgegenhaltungen:
- EP-A1- 0 880 991
- US-A- 4 096 085
- US-A- 5 618 506
- US-A1- 20050 202 967
- US-A1- 20080 078 292

## Beschreibung

Die vorliegende Erfindung betrifft ein Verfahren zum Entfernen von sauren Gasen aus Fluidströmen, insbesondere zum Entfernen von Kohlendioxid aus Rauchgasen.

Die Entfernung von Kohlendioxid aus Rauchgasen ist aus verschiedenen Gründen wünschenswert, insbesondere aber zur Verminderung der Emission von Kohlendioxid, die als Hauptursache für den so genannten Treibhauseffekt angesehen wird.

Im industriellen Maßstab werden zur Entfernung von Sauergasen, wie Kohlendioxid, aus Fluidströmen häufig wässrige Lösungen organischer Basen, z. B. Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden.

Rauchgase weisen sehr geringe Kohlendioxid-Partialdrücke auf, da sie in der Regel bei einem Druck nahe dem Atmosphärendruck anfallen und typischerweise 3 bis 20 Vol.-% Kohlendioxid enthalten. Anders als Fluide wie Erdgas oder Synthesegas enthalten Rauchgase außerdem Sauerstoff. Der Sauerstoff löst sich in geringen Spuren auch im Absorptionsmittel und kann dort bei erhöhten Temperaturen zu einer Degradation des Amins führen. Ein Absorbtionsmittel zur Abtrennung von Kohlendioxid aus Rauchgasen sollte folgende Kriterien erfüllen: (i) Ausreichende Kapazität bei kleinen CO₂-Partialdrücken; (ii) ausreichend schnelle Absorptionsgeschwindigkeit bei kleinen CO₂-Partialdrücken; (iii) Stabilität gegenüber Sauerstoff; (iv) geringer Dampfdruck zur Verminderung von Lösungsmittelverlusten; und (v) geringer Energiebedarf zur Regeneration des Absorptionsmittels.

Unter der Bezeichnung Fluor Econamine ist eine auf Monoethanolamin (MEA) basierende Technologie zur Abtrennung von Kohlendioxid aus Rauchgasen bekannt (vgl. z.B. Second National Conference on Cabron Sequestration, National Energy Technology Department of Energy, Alexandria VA, USA, May 5-8, 2003 unter dem Titel: Fluor's Econamine FG PlusSM Technology; An Enhanced Amine-Based CO2 Capture Process).

Gemische aus MDEA und Piperazin werden in der Literatur als ebenfalls geeignete Lösungsmittel zur CO₂-Abtrennung aus Rauchgasen beschrieben (Closman, F.; Nguyen, T.; Rochelle, G.T; MDEA/Piperazine as a solvent for CO2 capture, GHGT-9, Washington DC, USA, 2008, Nov 16 - 20).

Technologien auf Basis von Monoethanolalmin zeichnen sich zwar durch eine hohe Reaktität zwischen dem Amin und Kohlendioxid aus. Die hohe Reaktivität geht aber nachteilig mit einer hohen Absorptionsenthalpie und damit einem hohen Energiebedarf zur Regeneration einher. Andere Alkanolamine wie etwa Diethanolamin oder Methyldiethanolamin, die einen geringeren Energiebedarf zur Regeneration aufweisen, eignen sich auf Grund ihrer langsameren Reaktionskinetik zwischen Kohlendioxid und Amin für diese Trennaufgabe nur bedingt

Das US-Patent 4,096,085,offenbart eine korrosionsgeschützte wässrige N-Methyldiethanolamin- oder Diethanolamin-Lösung zur Behandlung von Sauergasen. Die korrosionsgeschützte Lösung enthält im Wesentlichen 10 bis 2000 ppm einer oder mehrerer Aminverbindungen, wie Diethylentriamin, Triethylendiamin und Piperazin, 0 bis 1000 ppm Kupfer oder einer Verbirndung, die Kupfehonen bereitzustellen vermag und 0 bis 1000 ppm Schwefel oder einer Verdindung, die Schwefelatome bereitzustellen vermag.

In der EP-A 538019 werden wässrige Lösungen sterich gehinderter Amine zur Entfernung von Kohlendioxod aus Rauchgasen beschrieben.

Die WO 2007/144372 offenbart ein Verfahren zum Entfernen von Köhlehdiöxid aus einem Gasstrom, in dem der partialdruck des Kohlendioxids im Gasstrom weniger als 200 mbar beträgt, z. B. aus. Rauchgas, durch Inkontaktbringen mit einer wässrigen Lösung eines tertiären aliphätischen Alkanolamins, und eines Aktivators, insbesondere 3-Methylaminopropytamin.

Die WO 2005/087349 beschreibt ein Verfahren zum Entfernen von Kohlendioxid aus einem Gasstrom, in dem der Partialdruck des Kohlendioxids im Gasstrom weniger als 200 mbar beträgt wobei man den Gasstrom mit einem flüssigen Absorptionsmittel in Kontakt bringt, das eine wässerige Lösung (A) einer Aminverbindung mit wenigstens zwei tertiären Aminogruppen im Molekül und (B) eines Aktivators, der unter primären und sekundären Aminen ausgewählt ist, umfasst,

Der vorliegenden Erfindung liegt die Aufgabe zugrunde, ein Absorptionsmittel zur Entfernung saurer Gase aus Fluidströmen, insbesondere zur Entfernung von Kohlendioxid, aus Rauchgasen, anzugeben, das die obigen Anforderungen besser erfüllt als die aus dem Stand der Technik bekannten Absorptionsmittel.

Die Erfindung stellt ein Absorptionsmittel zur Entfernung saurer Gase aus ethern Fluid bereit, das eine wässrige Lösung
A) wenigstens einer zyklischen Aminverbindung mit ausschließlich tertiären Amingruppen und
B) wenigstens einer zyklischen Aminverbindung mit wenigstens einer sterisch ungehinderten sekundären Amingruppe umfasst,
wobei die Gesamtkonzentration von A) + B) 10 bis 60 Gew.-% beträgt.
Die zyklische Aminverbindung A) weist vorzugsweise eine Molmasse von 250 g/mol oder weniger auf. Die zyklische Aminverbindung B) weist vorzugsweise eine Molmasse von 200 g/mol oder weniger auf.

Die erfindungsgemäß verwendeten zyklischen Aminverbindungen umfassen einen gesättigten Heterozyklus mit wenigstens einem Stickstoffatom als Ringatom. Unter tertiären Amingruppen werden vorliegend Amingruppen verstanden, worin das Stickstoffatom mit drei benachbarten Kohlenstoffatomen verbunden ist. Unter sterisch gehinderten sekundären Amingruppen werden vorliegend Amingruppen verstanden, worin das Stickstoffatom mit zwei benachbarten Kohlenstoffatomen verbunden ist und wenigstens ein zum Stickstoffatom benachbartes Kohlenstoffatom (α-Kohlenstoff) nicht mehr als ein Wasserstoffatom trägt. Mit anderen Worten trägt wenigstens ein α-Kohlenstoff wenigstens einen exozyklischen, von Wasserstoff verschiedenen Substituenten. Sterisch ungehinderte sekundäre Amingruppen sind solche, worin alle α-Kohlenstoffe als CH₂-Gruppen vorliegen,

Das Gewichtsverhältnis von A) zu B) beträgt vorzugsweise 0,5 bis 4, insbesondere 1 bis 3.

Die Gesamtkonzentration von A) + B) beträgt vorzugsweise 20 bis 45 Gew.-%.

Die Aminverbindungen werden in Form ihrer wässrigen Lösungen eingesetzt. Die Lösungen können zusätzlich physikalische Lösungsmittel enthalten, die z. B. ausgewählt sind unter cyclotebamethylensulfon (Sulfolan) und dessen Derivaten, aliphatischen Säureamiden (Acetylmorpholin, N-Formylmorpholin), N-alkylierten Pyrrolidonen und entsprechenden Piperidonen, wie N-Methylpyrrolidon (NMP). Propylencarbonat, Methanol, Dialkylethern von Polyethylenglykolen und Gemischen davon. In bestimmten Ausführungsformen enthält das Absorptionsmittel kein physikalisches Lösungsmittel, d. h. das Absorptionsmittel besteht im Wesentlichen aus den Aminverbindungen A) und B) und Wasser.

In bevorzugten Ausführungsformen weist die zyklische Aminverbindung A) einen 5- bis 7-gliedrigen Ring der allgemeinen Formel I auf, 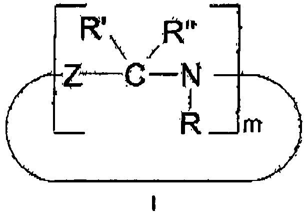 worin m für t, 2 oder 3 steht; R für C₁-C₄-Alkyl oder C₂-C₄-Hydroxyalkyl steht; oder für den Fall, dass m für 2 steht, zwei Reste R gemeinsam eine C₂-C₃-Alkylenbrücke bilden können; R' für H, C₁-C₄-Alkyl oder C₂-C₄-Hydroxyalkyl steht; R" für H oder C₁-C₄-Alkyl steht; Z für eine Bindung oder C₁-C₆-Alkylen steht.

Spezifische Beispiele für die zyklische Aminverbindung A) sind:
Triethylendiamin 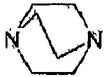
1-Hydroxyethylpiperidin 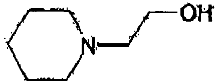
Bis(hydroxyethyl)piperazin) 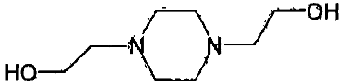
N,N'-Dimethylpiperazin 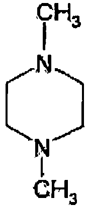
1-Methyl-2-pyrrolidinethanol

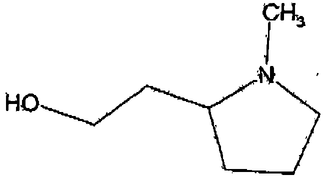

In bevorzugten Ausführungsformen weist die zyklische Aminverbindung B) die allgemeine Formel II auf, 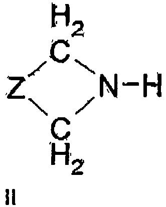 worin Z für C₂-C₄-Alkylen steht, das gegebenenfalls durch O oder eine Gruppe NR"' unterbrochen ist, worin R"' für H, C₁-C₄-Alkyl oder C₂-C₄-Hydroxyalkyl steht, und das gegebenenfalls durch C₁-C₄-Alkyl oder C₂-C₄-Hydroxyalkyl ein- oder mehrfach substituiert ist.

Spezifische Beispiele für die zyklische Aminverbindung B) sind:
Piperazin 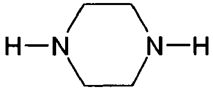
Homopiperazin 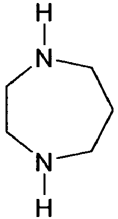
1-Hydroxyethyl-piperazin 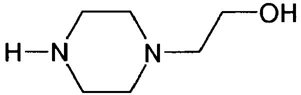
4-Hydroxyethyl-piperidin 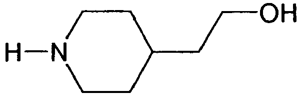
1-Methylpiperazin 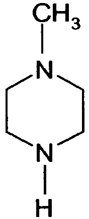
2-Methylpiperazin

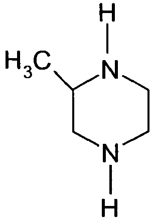

Erfindungsgemäß besonders bevorzugte Absorptionsmittel umfassen eine wässrige Lösung von
A) 1-Hydroxyethyl-piperidin und/oder Triethylendiamin; und
B) Piperazin.

Das Absorptionsmittel kann auch Additive, wie Korrosionsinhibitoren, Enzyme etc. enthalten. Im Allgemeinen liegt die Menge an derartigen Additiven im Bereich von etwa 0,01-3 Gew.-% des Absorptionsmittels.

Die Erfindung betrifft auch ein Verfahren zum Entfernen saurer Gase, insbesondere von Kohlendioxid, aus einem Fluidstrom, wobei man den Fluidstrom mit einem oben definierten Absorptionsmittel in Kontakt bringt.

Das erfindungsgemäße Verfahren bzw. Absorptionsmittel ist geeignet zur Behandlung von Fluiden, insbesondere Gasströmen aller Art. Bei den sauren Gasen handelt es sich insbesondere um CO₂, H₂S, COS und Merkaptane. Außerdem können auch SO₃, SO₂, CS₂ und HCN entfernt werden.

Fluide, welche die sauren Gase enthalten, sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids).

Das erfindungsgemäße Verfahren bzw. Absorptionsmittel ist besonders zur Behandlung von sauerstoffhaltigen Fluidströmen geeignet.

In bevorzugten Ausführungsformen entstammt der Fluidstrom
a) der Oxidation organischer Substanzen,
b) der Kompostierung oder Lagerung organischer Substanzen enthaltender Abfallstoffe, oder
c) der bakteriellen Zersetzung organischer Substanzen.

In einigen Ausführungsformen beträgt der Partialdruck von Kohlendioxid im Fluidstrom weniger als 500 mbar, z. B. 30 bis 150 mbar.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organische Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände und dergleichen verwendet. Die bakterielle Zersetzung erfolgt z.B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Die Fluidströme der obigen Genese a), b) oder c) können beispielsweise entweder den Druck aufweisen, der etwa dem Druck der Umgebungsluft entspricht, also z. B. Normaldruck oder einen Druck, der vom Normaldruck um bis zu 1 bar davon abweicht.

Zur Durchführung des erfindungsgemäßen Verfahrens geeignete Vorrichtungen umfassen wenigstens eine Waschkolonne, z. B. Füllkörper, Packungs- und Bodenkolonnen, und/oder andere Absorber wie Membrankontaktoren, Radialstromwäscher, Strahlwäscher, Venturi-Wäscher und Rotations-Sprühwäscher. Die Behandlung des Gasstroms mit dem Absorptionsmittel erfolgt dabei bevorzugt in einer Waschkolonne im Gegenstrom. Der Gasstrom wird dabei im Allgemeinen in den unteren Bereich und das Absorptionsmittel in den oberen Bereich der Kolonne eingespeist.

Die Temperatur des Absorptionsmittels beträgt im Absorptionsschritt im Allgemeinen etwa 30 bis 70°C, bei Verwendung einer Kolonne beispielsweise 30 bis 60°C am Kopf der Kolonne und 40 bis 70°C am Boden der Kolonne. Es wird ein an sauren Gasbestanteilen armes, d. h. ein an diesen Bestandteilen abgereichertes Produktgas (Beigas) und ein mit sauren Gasbestandteilen beladenes Absorptionsmittel erhalten.

In einer vorteilhaften Ausführungsform führt man die Entfernung des Sauergases in einer im Gegenstrom betriebenen Waschkolonne, bei der sich im Inneren eine diskontinuierliche flüssige Phase ausbildet, in Gegenwart von im Inneren der Waschkolonne vorhandenen Aktivkohle durch. Die einzusetzende Waschkolonne enthält zudem die üblicherweise verwendeten Einbauten wie beispielsweise Füllkörper oder Packungen. Die Aktivkohle weist bevorzugt einen Kohlenstoffgehalt von über 90 Gew.-% und eine BET-Oberfläche von 300 bis 2000 m²/g auf. Ihre Konzentration beträgt im Allgemeinen 1 bis 2000 g Aktivkohle pro m³ Volumen der Waschkolonne. Die Aktivkohle kann auf verschiedene Arten zugeführt werden. In einer bevorzugten Ausführungsform wird sie im flüssigen Absorptionsmittel suspendiert. In diesem Fall liegt ihre Partikelgröße bevorzugt im Bereich von 0,1 bis 1000 µm, besonders bevorzugt 0,1 bis 50 µm. Bezogen auf das flüssige Absorptionsmittel beträgt die Konzentration der suspendierten Aktivkohle bevorzugt 0,01 bis 20 kg pro m³, besonders bevorzugt 1 bis 10 kg pro m³. In einer anderen bevorzugten Ausführungsform wird sie in örtlich fixierter Form innerhalb der Waschkolonne angebracht. In diesem Fall befindet sich die Aktivkohle beispielsweise in fest angebrachten flüssigkeits- und gasdurchlässigen Taschen (etwa in Form von Aktivkohle-Pellets) oder in mit Aktivkohle beschichteten Packungen oder Füllkörpern fixiert in der Waschkolonne. Bezogen auf das Volumen der Waschkolonne beträgt die Konzentration der fixierten Aktivkohle bevorzugt 1 g bis 2 kg pro m³, besonders bevorzugt 100 g bis 1 kg pro m³. Durch die Gegenwart von Aktivkohle wird die Absorptionsgeschwindigeit des flüssigen Absorptionsmittels gesteigert, was zu einer noch effektiveren Verfahrensführung führt. Weitere Details zum Einsatz von Aktivkohle in der Absorption von Sauergasen in wässrigen alkalischen Absorptionsmitteln sind in der europäischen Prioritätsschrift mit dem Aktenzeichen EP-Az. 09 154 427.0 beschrieben.

Aus dem mit den sauren Gasbestandteilen beladenen Absorptionsmittel kann das Kohlendioxid in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen regeneriert man das beladene Absorptionsmittel durch
a) Erwärmung, z. B. auf 70 bis 130 °C,
b) Entspannung,
c) Strippen mit einem inerten Fluid
oder eine Kombination zweier oder aller dieser Maßnahmen.

In der Regel wird das beladene Absorptionsmittel zur Regeneration erwärmt und das freigesetzte Kohlendioxid wird z. B. in einer Desorptionskolonne abgetrennt. Bevor das regenerierte Absorptionsmittel wieder in den Absorber eingeführt wird, wird es auf eine geeignete Absorptionstemperatur abgekühlt. Um die im heißen regenerierten Absorptionsmittel enthaltene Energie auszunutzen, ist es bevorzugt, das beladene Absorptionsmittel aus dem Absorber durch Wärmetausch mit dem heißen regenerierten Absorptionsmittel vorzuerwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des beladenen Absorptionsmittels unter Freisetzung von Kohlendioxid erfolgen. Der erhaltene gas-flüssig-gemischtphasige Strom wird in ein Phasentrenngefäß geleitet, aus dem das Kohlendioxid abgezogen wird; die Flüssigphase wird zur vollständigen Regeneration des Absorptionsmittels in die Desorptionskolonne geleitet.

Vor der erfindungsgemäßen Absorptionsmittel-Behandlung wird das Rauchgas vorzugsweise einer Wäsche mit einer wässrigen Flüssigkeit, insbesondere mit Wasser, unterzogen, um das Rauchgas abzukühlen und zu befeuchten (quenchen). Bei der Wäsche können auch Stäube oder gasförmige Verunreinigungen wie Schwefeldioxid entfernt werden.

Die Erfindung wird durch die beigefügten Zeichnungen und die nachfolgenden Beispiele näher veranschaulicht.
Figur 1 zeigt eine zur Durchführung des erfindungsgemäßen Verfahrens geeignete Anlage.
Figur 2 zeigt eine schematische Darstellung einer Doppelrührzelle, die zur Bestimmung der relativen Absorptionsraten verschiedener Absorptionsmittel dient.

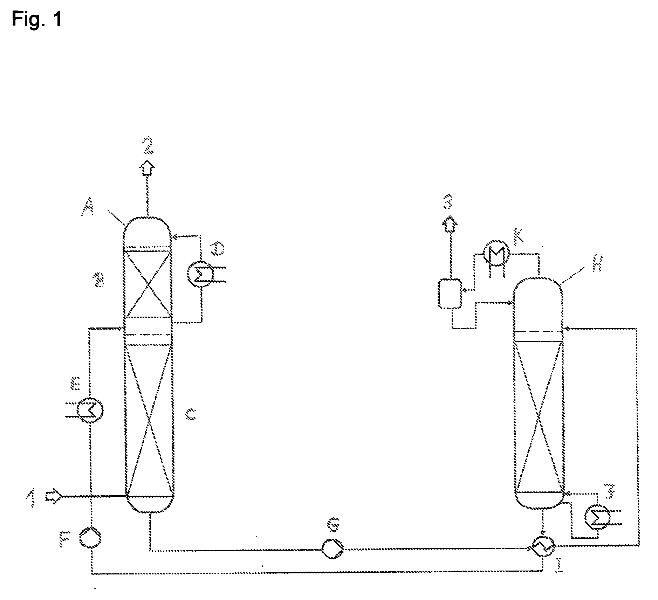

In Figur 1 haben die verwendeten Bezugszeichen folgende Bedeutung:
- 1: = Rauchgas
- 2: = An Kohlendioxid verarmtes Rauchgas
- 3: = Abgetrenntes Kohlendioxid
- A: = Absorptionskolonne
- B: = Wasserwäsche
- C: = Absorption
- D: = Kühler
- E: = Kühler
- F: = Pumpe
- G: = Pumpe
- H: = Desorptionskolonne
- I: = Wärmetauscher
- J: = Verdampfer (Reboiler)
- K: = Kondensator

Gemäß Figur 1 wird Rauchgas 1 in den unteren Teil der Absorptionskolonne A geleitet und im Gegenstrom mit dem Absorptionsmittel in Kontakt gebracht. Das an Kohlendioxid verarmte Rauchgas wird im oberen Teil der Absorptionskolonne mit Wasser gewaschen und über Kopf als Strom 2 aus der Kolonne geführt. Das mit Kohlendioxid beladene Absorptionsmittel wird am Boden der Absorptionskolonne A entnommen und über die Pumpe G und dem Wärmetauscher I in die Desorptionskolonne H geführt. Im unteren Teil der Desorptionskolonne wird das beladene Absorptionsmittel über den Verdampfer J erwärmt. Durch die Temperaturerhöhung geht ein Teil des absorbierten Kohlendioxids wieder in die Gasphase über. Diese wird am Kopf der Desorptionskolonne H abgeführt und im Kondensator K abgekühlt. Auskondensiertes Absorptionsmittel wird über den Kopf wieder zurückgeführt. Das gasförmige Kohlendioxid wird als Strom 3 entnommen. Das regenerierte Absorptionsmittel wird über die Pumpe F und dem Kühler E wieder zur Absorptionskolonne A rückgeführt.

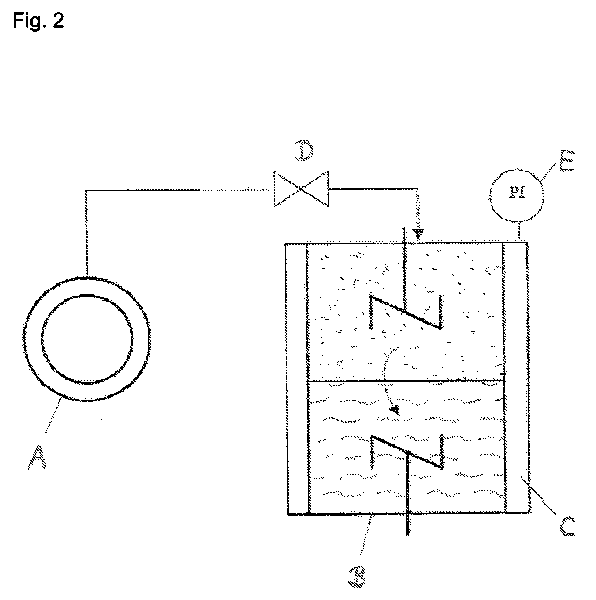

In der Figur 2 haben verwendeten Bezugszeichen folgende Bedeutung:
- A: = Kohlendioxid-Vorratsbehälter
- B: = Doppelrührzelle
- C: = Thermostatierung
- D: = Dosierventil
- E: = Druckmeßgerät

In der Doppelrührzelle B liegt eine untere flüssige Phase des zu testenden Absorptionsmittels vor, die über eine Phasengrenzfläche mit der darüberliegenden Gasphase in Kontakt steht. Flüssig- und Gasphase sind jeweils mit einem Rührer durchmischbar. Die Doppelrührzelle B ist über das Dosierventil D mit einem Kohlendioxid-Vorratsbehälter verbunden. Der Druck in der Doppelrührzelle B kann mit dem Druckmeßgerät E bestimmt werden. Bei der Messung wird der Kohlendioxid-Volumenstrom aufgezeichnet, der sich einstellt, um einen vorgegebenen Druck in der Doppelrührzelle B einzuhalten.

In den Beispielen werden folgende Abkürzungen verwendet:
MEA = Monoethanolamin
MDEA = Methyldiethanolamin
TEDA = Triethylendiamin
1-HEPi = 1-Hydroxyethylpiperidin
PIP = Piperazin
MPE = 1-Methyl-2-pyrrolidinethanol
AC = Aktivkohle

### Beispiel 1: Relative Kreislaufkapazität und relativer Dampfmengenbedarf zur Regeneration bei erfindungsgemäßen und nicht erfindungsgemäßen Absorptionsmittein

Zur Bestimmung der Kohlendioxid-Kreislaufkapazität und des Regenerationsbedarfs wurden Laborversuche mit verschiedenen, mit Kohlendioxid beladenen Absorptionsmitteln durchgeführt. Als Vergleichsbasis dient eine 30 Gew.-%ige Lösung von Monoethanolamin in Wasser sowie ein mit Piperazin aktiviertes Methyldiethanolamin-Lösungsmittel.

Zur Ermittelung der relativen Kreislaufkapazität und der Abschätzung des relativen Dampfmengenbedarfs zur Regeneration des Absorptionsmittels wurden die Gleichgewichtsbeladungen von Kohlendioxid im Absorptionsmittel in Abhängigkeit vom Kohlendioxid-Partialdruck bei 40 (für Absorbersumpf) und 120°C (für Desorbersumpf) bestimmt. Diese Messungen wurden für alle in der Tabelle 1 aufgeführten Systeme durchgeführt. Zur Bestimmung der Gleichgewichtsbeladung wurde ein Glasdruckgefäß mit einem Volumen von ca. 100 cm³ eingesetzt. In diesem wurde eine definierte Menge des Absorptionsmittel vorgelegt, das Gefäß evakuiert, und bei konstanter Temperatur Kohlendioxid stufenweise über ein definiertes Gasvolumen zudosiert. Die in der Flüssigphase gelöste Menge Kohlendioxid wurde unter Berücksichtigung der Gasraumkorrektur durch die darüberstehende Gasphase berechnet.

Für die Abschätzungen der Kreislaufkapazität des Absorptionsmittels wurden folgende Annahmen gemacht:
1. Der Absorber wird bei einem Gesamtdruck von einem bar mit einem Kohlendioxid-haltigen Rauchgas mit einem Kohlendioxid-Partialdruck von 130 hPa (entspricht in etwa 13 Vol.-% Kohlendioxid im Rauchgas bei Atmosphärendruck) beaufschlagt.
2. Im Absorbersumpf herrscht eine Temperatur von 40°C.
3. Bei der Regeneration herrscht im Desorbersumpf eine Temperatur von 120°C.
4. Im Absorbersumpf wird ein Gleichgewichtszustand erreicht. Der Kohlendioxid-Gleichgewichtspartialdruck ist somit gleich dem Feedgas-Partialdruck von 130 hPa.
5. Bei der Desorption herrscht ein Kohlendioxid-Partialdruck von 100 hPa im Desorbersumpf.
6. Bei der Desorption wird ein Gleichgewichtszustand erreicht.

Die Kapazität des Absorptionsmittels wurde aus der Beladung (in Nm³ Kohlendioxid / t Absorptionsmittel) am Schnittpunkt der 40°C-Gleichgewichtskurve mit der Linie des konstanten Feedgas-Kohlendioxid-Partialdruckes von 13 kPa (beladene Lösung am Absorbersumpf im Gleichgewicht) und aus der Beladung am Schnittpunkt der 120°C-Gleichgewichtskurve mit der Linie des konstanten Partialdrucks von 100 hPa (regenerierte Lösung am Desorbersumpf im Gleichgewicht) ermittelt. Die Differenz beider Beladungen ist die Kreislaufkapazität des jeweiligen Lösungsmittels. Eine große Kapazität bedeutet, dass weniger Lösungsmittel im Kreis gefahren werden muss und damit die Apparate wie beispielsweise Pumpen, Wärmetauscher aber auch Rohrleitungen kleiner dimensioniert werden können. Weiterhin beeinflusst die Umlaufmenge auch die zum Regenerieren notwendige Energie.

Ein weiteres Maß für die Anwendungseigenschaften eines Absorptionsmittels ist die Steigung der Arbeitsgeraden im McCabe-Thiele-Diagramm des Desorbers. Für die Verhältnisse im Sumpf des Desorbers liegt die Arbeitsgerade in der Regel sehr nahe bei der Gleichgewichtslinie, so dass die Steigung der Gleichgewichtskurve näherungsweise der Steigung der Arbeitsgeraden gleichgesetzt werden kann. Bei konstanter Flüssigkeitsbelastung ist zur Regeneration eines Absorptionsmittels mit einer großen Steigung der Gleichgewichtskurve eine geringere Strippdampfmenge erforderlich. Der Energiebedarf zur Erzeugung des Strippdampfes trägt wesentlich zum Gesamtenergiebedarf des Kohlendioxid-Absorptionsprozesses bei.

Zweckmäßigerweise gibt man den Reziprokwert der Steigung an, da dieser direkt proportional zur benötigten Dampfmenge pro Kilogramm Absorptionsmittel ist. Dividiert man den Reziprokwert durch die Kapazität des Absorptionsmittels, so erhält man einen Vergleichswert, der direkt eine relative Aussage über die benötigte Dampfmenge pro absorbierter Kohlendioxid-Menge ermöglicht.

In Tabelle 1 sind für erfindungsgemäße Absorptionsmittel die Werte der relativen Kreislaufkapazität und des relativen Dampfmengenbedarfs dargestellt (normiert auf MEA). Im Vergleich zu 30 Gew.-% MEA ist die relative Kreislaufkapazität beim Einsatz eines erfindungsgemäßen Lösungsmittel zwischen 3 und 46 % größer. Der relative Dampfmengenbedarf ist für die erfindungsgemäße Lösungsmittel signifikant niedriger als für das Vergleichslösungsmittel MEA, was in der großtechnischen Anwendung ein enormes Sparpotenzial darstellt. Das Vergleichsabsorptionsmittel aus MDEA und Piperazin zeigt hinsichtlich der Kapazität und des Energiebedarfes ebenfalls eine deutliche Verbesserung gegenüber Monoethanolamin.

### Beispiel 2: Relative Absorptionsraten bei erfindungsgemäßen und nicht erfindungsgemäßen Absorptionsmitteln

Zur Bestimmung der Stofftransportgeschwindigkeit des Kohlendioxids aus dem Gasstrom in das Absorptionsmittel wurden Messungen in einer Doppelrührzelle (Figur 2) durchgeführt. Die Stofftransportgeschwindigkeit setzt sich bei einer Reaktivabsorption sowohl aus dem physikalischen Stofftransport als auch der Reaktionskinetik zwischen dem Absorptionsmittel und dem Kohlendioxid zusammen. Diese beiden Einflussgrößen können in der Doppelrührzelle als summarischer Parameter gemessen werden. Als Vergleichsbasen dienten 31,2 Gew.-% Monoethanolamin (MEA) in Wasser, sowie 25 Gew.-% Methyldiethanolamin mit 15 Gew.-% Piperazin in Wasser. Die erfindungsgemäßen Absorptionsmittel enthielten 15 bis 30 Gew.-% des zyklischen tertiären Amines und 15 Gew.-% Piperazin.

Die Doppelrührzelle hatte einen inneren Durchmesser von 85 mm und ein Volumen von 509 ml. Die Zelle wurde während der Versuche auf 50°C thermostatisiert. Zur Durchmischung der Gas- und Flüssigphase war die Zelle gemäß der schematischen Darstellung mit zwei Rührern ausgerüstet. Vor Beginn des Versuches wurde die Doppelrührzelle evakuiert. Ein definiertes Volumen des entgasten Absorptionsmittels wurde in die Doppelrührzelle gefördert und auf 50°C thermostatisiert. Während des Aufheizens des unbeladenen Absorptionsmittels wurden bereits die Rührer eingeschaltet. Die Rührerdrehzahl wurde so gewählt, dass sich eine ebene Phasengrenzfläche zwischen der Flüssigphase und Gasphase einstellt. Eine Wellenbildung an der Phasengrenzfläche ist zu vermeiden, da hierdurch keine definierte Phasengrenzfläche vorliegen würde. Nachdem die gewünschte Versuchstemperatur erreicht wurde, wurde über ein Regelventil Kohlendioxid in den Reaktor eingeleitet. Der Volumenstrom wurde so geregelt, dass in der Doppelrührzelle während des Versuchs ein konstanter Druck von 50 hPa abs (entspricht Kohlendioxid-Partialdruck) herrschte. Mit zunehmender Versuchsdauer nahm der Volumenstrom an Kohlendioxid ab, da das Absorptionsmittel mit der Zeit gesättigt wurde und somit die Absorptionsrate abnahm. Der Volumenstrom an Kohlendioxid, der in die Doppelrührzelle strömte, wurde über die gesamte Versuchsdauer registriert. Das Versuchsende war erreicht sobald kein Kohlendioxid mehr in die Doppelrührzelle strömte. Das Absorptionsmittel lag am Versuchsende nahezu im Gleichgewichtszustand vor.

Zur Auswertung der Versuche wurde die Absorptionsrate in mol CO₂ / (m³ Absorptionsmittel · min) in Abhängigkeit von der Beladung des Absorptionsmittels bestimmt. Die Absorptionsrate wurde aus dem registrierten Volumenstrom an Kohlendioxid und dem eingefüllten Volumen an Absorptionsmittel berechnet. Die Beladung wurde aus der akkumulierten Menge an Kohlendioxid, die der Doppelrührzelle zugeführt wurde, und der eingefüllten Masse an Absorptionsmittel bestimmt.

In Tabelle 2 sind die mittleren relativen Absorptionsraten von verschiedenen Absorptionsmitteln, normiert auf die mittlere Absorptionsrate von 25 Gew.-% MDEA/15 Gew.-% PIP, dargestellt. Die mittlere Absorptionsrate wurde wie folgt ermittelt: Ausgehend von der maximalen Beladung des Absorptionsmittel (nahezu Gleichgewichtszustand bei einem CO₂-Partialdruck von 50 hPa und einer Temperatur von 50°C) wurden die Absorptionsraten bei 75, 50 und 20 % Beladung der maximalen Beladung bestimmt und gemittelt. Absorptionsraten bei kleiner 20 % Beladung werden bei der Mittelung nicht berücksichtigt, da das Absorptionsmittel im technischen Prozess mit einer Restbeladung an CO₂ in den Absorptionsapparat gelangt.

Im Vergleich zu dem MDEA/PIP-Absorptionsmittel sind die Absorptionsraten der erfindungsgemäßen Absorptionsmittel größer, teilweise sogar größer als die von Monoethanolamin, das sehr reaktiv gegenüber CO₂ ist.

Für das Absorptionsmittel bestehend aus 15 Gew.-% PIP und 25 Gew.-% TEDA und 0,1 Gew.-% Aktivkohle konnte eine weitere Erhöhung der Absorptionsraten im Vergleich zu einem Absorptionsmittel bestehend aus 15 Gew.-% PIP und 25 Gew.- TEDA beobachtet werden. Durch die Zugabe der Aktivkohle hat sich die Absorptionsrate um mehr als den Faktor 2 erhöht.

Unter Berücksichtigung von Beispiel 1 wird deutlich, dass die erfindungsgemäßen Absorptionsmittel bei Betrachtung aller drei Kriterien - zyklische Kapazität, Regenerationsbedarf und Absorptionsrate - sowohl gegenüber MEA als auch der Mischung bestehend aus MDEA und PIP Vorteile aufzeigt. So würde eine wässrige MEA-Lösung zwar eine sehr hohe Absorptionsrate aufweisen, aber ebenso auch einen sehr hohen Energiebedarf bei der Regeneration. Umgekehrt würde eine wässrige Mischung aus MDEA und PIP nur eine unzureichend niedrige Absorptionsrate aufweise, was bei der technischen Umsetzung eine wesentlich größere Absorberkolonne erfordern würde. Die Beispiele 1 und 2 belegen, dass durch den Einsatz einer entsprechenden Mischung überraschenderweise ein sehr ausgewogenes Absorptionsmittel erhalten wird, welches sowohl eine hohe Absorptionsrate aufweist als auch einen sehr niedrigen Energiebedarf zur Regeneration erfordert.

### Beispiel 3: Sauerstoffstabilität von erfindungsgemäßen und nicht erfindungsgemäßen Absorptionsmittel

Zur Untersuchung der Sauerstoffstabilität der wässrigen Aminmischungen wurden die im Folgenden beschriebenen Untersuchungen durchgeführt. In einem durch ein Ölbad beheizbaren Autoklaven wurden etwa 150 ml der Absorptionsmittel vorgelegt. Bei einer Temperatur von 40 °C wurde in diese Probe kontinuierlich ein Gasgemisch (V = 7,5 NI/h) bestehen aus 33 Vol% CO₂, 14 Vol% Sauerstoff und 53 Vol% Stickstoff geleitet, zusätzlich wurde die Flüssigkeit mit 10 NI/h Stickstoff überdeckt. Zur Verteilung des Gases in die gesamte Flüssigkeit wurde eine Metallfritte verwendet. Zur Verhinderung von Absorptionsverlusten befindet sich oberhalb des Autoklaven ein Rückflusskühler, der bei einer Temperatur von 4 °C betrieben wird. Die Konzentration an CO₂ am Austritt des Rückflusskühlers wird mittels einer IR-Sonde bestimmt. Sobald das Absorptionsmittel vollständig mit CO₂ beladenen ist, steigt die mit der IR-Sonde gemessene CO₂-Konzentration sprunghaft an. Die Zufuhr an Gas wird gestoppt und die Probe wird auf 100 °C aufgeheizt. Zum Strippen der Probe wird nun ausschließlich Stickstoff in das Absorptionsmittel geleitet. Während des Strippens der Probe wird die Konzentration am Austritt des Rückflusskühlers ebenfalls mit der IR-Sonde überwacht. Sobald die CO₂-Konzentration nahezu 0 beträgt, wird der Inhalt des Autoklaven auf 40 °C abgekühlt und der Zyklus wiederholt sich von neuem. Durch diesen Zyklus wird der Absorptionsvorgang und Desorptionsvorgang nachgestellt. Nach jedem Zyklus wird eine kleine Probe des Absorptionsmittels entnommen und mittels Gaschromatographie auf seine Bestandteile (Amingehalte) untersucht. Diese Versuche werden über mehrere hundert Stunden durchgeführt und erlauben somit eine Aussage über die Stabilität des Absorptionsmittels. Es wird somit ein Summenparameter für die Stabilität ermittelt, da sowohl die Sauerstoffstabilität, die thermische Stabilität als auch die Stabilität des Amins gegenüber CO₂ bestimmt wird.

Für die in Tabelle 3 aufgeführten Beispiele wurde jeweils eine Versuchsreihe durchgeführt, bei der mindestens 2 Autoklaven parallel betrieben wurde. Ein Autoklav wurde mit einer 30 Gew.-% Monoethanolaminlösung betrieben, der zweite mit einem zu testenden Absorptionsmittel. Als Maß wurde der relative Aminverlust der Aminverbindung A) im Vergleich zum Verlust an MEA dargestellt. D.h. bei 100 % ist die Aminverbindung A) genauso stabil wie MEA bzw. bei 10 % um den Faktor 10 stabiler.

Die Stabilität von Piperazin wurde bereits von Freeman et al. untersucht. Die Ergebnisse sind u.a. beschriebenen in Freeman, S. A.; Dugas, R. van Wagener, D., Nguyen, T.; Rochelle G.T.: Carbon dioxide capture with concentrated, aqueous piperazine, GHGT-9, 2008 Nov 16-20, Washington DC, USA. In diesen Untersuchungen wurde gefunden, dass Piperazin im Vergleich zu Monoethanolamin 4-mal stabiler gegenüber Sauerstoff ist, und im Vergleich zu Monoethanolamin keine thermische Degradation zeigt.

**Tabelle 1: Relative Kreislaufkapazität und Dampfmengenbedarf normiert auf MEA**

| Zusammensetzung in Gew.-% | relative zyklische Kapazität | relativer Dampfmengenbedarf |
|---|---|---|
| 30 % MEA | 100% | 100% |
| 25% MDEA + 15 % PIP | 116% | 48% |
| 15 % TEDA + 15 PIP | 103% | 60% |
| 25 % TEDA + 15 % PIP | 124% | 52% |
| 15 % 1-HEPi + 15 % PIP | 108% | 61% |
| 30 % 1-HEPi + 15 % PIP | 146% | 39% |
| 30 % 2-HEPi + 15 % PIP | 135% | 73% |
| 30% MPE 15% PIP | 143% | 45% |

**Tabelle 2: Relative mittlere Absorptionsrate von verschiedenen Absorptionsmittel normiert auf 25 Gew.-% MDEA und 15 Gew.-% PIP**

| Zusammensetzung in Gew.-% | mittlere relative Absorptionsrate |
|---|---|
| | |
| 30 % MEA | 181% |
| 25 % MDEA + 15 % PIP | 100% |
| 30 % 1-HEPi + 15 % PIP | 156% |
| 15 % 1-HEPi + 15 % PIP | 203% |
| 15 % TEDA + 15 % PIP | 167% |
| 25 % TEDA + 15 % PIP | 112% |
| 25 % TEDA + 15 % PIP + 0,1 % AC* | 253% |

| | |
|---|---|
| * Norit SA Super (BET-Oberfläche 1150 m²/g) | |

**Tabelle 3: Relative Stabilität von tertiären zyklischen Aminen im Vergleich zu MEA**

| Tertiäres Amin | Versuchsdauer | Stabilität = relativer Aminverlust im Vergleich zu MEA |
|---|---|---|
| | [h] | - |
| 1-HEPi | 650 | 11% |
| TEDA | 350 | 3% |
| MPE | 300 | 47% |

## Patentansprüche

1. Absorptionsmittel zur Entfernung saurer Gase aus einem Fluidstrom, umfassend eine wässrige Lösung
A) wenigstens einer zyklischen Aminverbindung mit ausschließlich tertiären Amingruppen, und
B) wenigstens einer zyklischen Aminverbindung mit wenigstens einer sterisch ungehinderten sekundären Amingruppe,
wobei die Gesamtkonzentration von A) + B) 10 bis 60 Gew.-% beträgt.

2. Absorptionsmittel nach Anspruch 1, wobei das Gewichtsverhältnis von A) zu B) 0,5 bis 4 beträgt.

3. Absorptionsmittel nach einem der vorhergehenden Ansprüche, wobei die zyklische Aminverbindung A) einen 5- bis 7-gliedrigen Ring der allgemeinen Formel **I** aufweist, 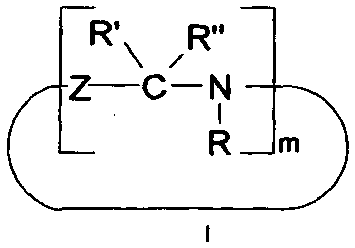 worin m für 1, 2 oder 3 steht, R für C₁-C₄-Alkyl oder C₂-C₄-Hydroxyalkyl steht;
oder für den Fall, dass m für 2 steht, zwei Reste R gemeinsam eine C₂-C₃-Alkyfenbrücke bilden können; R' für H, C₁-C₄-Alkyl oder C₂-C₄-Hydroxyalkyl steht; R" für H oder C₁-C₄-Alkyl steht; Z für eine Bindung oder C₁-C₆-Alkylen steht.

4. Absorptionsmittel nach Anspruch 3, wobei die zyklische Aminverbindung A) ausgewählt ist unter:
Triethylendiamin, 1-Hydroxyethylpiperidin, Bis(hydroxyethyl)piperazin, N,N'-Dimethytpiperazin und 1-Methyl-2-pyrrolidinethanol.

5. Absorptionsmittel nach einem der vorhergehenden Ansprüche, wobei die zyklische Aminverbindung B) die allgemeine Formel II aufweist 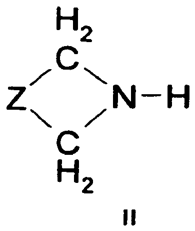 worin Z für C₂-C₄-Alkylen steht, das gegebenenfalls durch O oder eine Gruppe NR'" unterbrochen ist, worin R"' für H, C₁-C₄-Alkyl oder C₂-C₄-Hydroxyalkyl steht, und das gegebenenfalls durch C₁-C₄-Alkyl oder C₂-C₄-Hydroxyalkyl ein- oder mehrfach substituiert ist.

6. Absorptionsmittel nach Anspruch 5, wobei die zyklische Aminverbindung B) ausgewählt ist unter Piperazin, Homopiperazin, 1-Hydroxyethyl-piperazin, 4-Hydroxyethyl-piperidin, 1-Methylpiperazin und 2-Methylpiperazin.

7. Absorptionsmittel nach einem der vorhergehenden Ansprüche, umfassend eine wässrige Lösung von
A) 1-Hydroxyethyl-piperidin und/oder Triethylendiamin; und
B) Piperazin.

8. Verfahren zum Entfernen saurer Gase aus einem Fluidstrom, wobei man den Fluidstrom mit einem Absorptionsmittel nach einem der vorhergehenden Ansprüche in Kontakt bringt.

9. Verfahren nach Anspruch 8, wobei der Partialdruck von Kohlendioxid im Fluidstrom weniger als 500 mbar beträgt.

10. Verfahren nach Anspruch 8 oder 9, wobei der Fluidstrom
a) der Oxidation organischer Substanzen.
b) der Kompostierung oder Lagerung organischer Substanzen enthaltender Abfallstoffe, oder
c) der bakteriellen Zersetzung organischer Substanzen
entstammt

11. Verfahren nach einem der Ansprüche 8 bis 10, wobei man den Fluidstrom in einer im Gegenstrom betriebenen Waschkolonne in Gegenwart von im Inneren der Waschkolonne vorhandener Aktivkohle mit dem Absorptionsmittel in Kontakt bringt, wobei sich im Inneren der Waschkolonne eine diskontinuierliche flüssige Absorptionsmittelphase ausbildet.

12. Verfahren nach einem der Ansprüche 8 bis 11, wobei man das beladene Absorptionsmittel durch
a) Erwärmung,
b) Entspannung,
c) Strippen mit einem inerten Fluid
oder eine Kombination zweier oder alter dieser Maßnahmen regeneriert.

## Claims

1. An absorption medium for removing acid gases from a fluid stream, which absorption medium comprises an aqueous solution of
A) at least one cyclic amine compound having solely tertiary amine groups and
B) at least one cyclic amine compound having at least one sterically unhindered secondary amine group,
wherein the total concentration of A) + B) is 10 to 60% by weight.

2. The absorption medium according to claim 1, wherein the weight ratio of A) to B) is 0.5 to 4.

3. The absorption medium according to any of the preceding claims, wherein the cyclic amine compound A) has a 5- to 7-member ring of the general formula I, 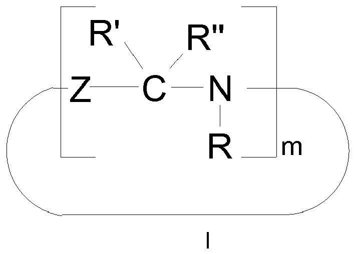 where m is 1, 2 or 3; R is C₁-C₄-alkyl or C₂-C₄-hydroxyalkyl; or, in the event that m is 2, two moieties R together can form a C₂-C₃-alkylene bridge; R' is H, C₁-C₄-alkyl or C₂-C₄-hydroxyalkyl; R" is H or C₁-C₄-alkyl; Z is a bond or C₁-C₆-alkylene.

4. The absorption medium according to claim 3, wherein the cyclic amine compound A) is selected from:
triethylenediamine, 1-hydroxyethylpiperidine, bis(hydroxyethyl)piperazine, N,N'-dimethylpiperazine and 1-methyl-2-pyrrolidineethanol.

5. The absorption medium according to any of the preceding claims, wherein the cyclic amine compound B) has the general formula II 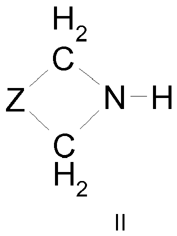 where Z is C₂-C₄-alkylene which is optionally interrupted by O or a group NR"', where R'" is H, C₁-C₄-alkyl or C₂-C₄-hydroxyalkyl, and which is optionally monosubstituted or polysubstituted by C₁-C₄-alkyl or C₂-C₄-hydroxyalkyl.

6. The absorption medium according to claim 5, wherein the cyclic amine compound B) is selected from piperazine, homopiperazine, 1-hydroxyethylpiperazine, 4-hydroxyethylpiperidine, 1-methylpiperazine and 2-methylpiperazine.

7. The absorption medium according to any of the preceding claims, comprising an aqueous solution of
A) 1-hydroxyethylpiperidine and/or triethylenediamine; and
B) piperazine.

8. A method of removing acid gases from a fluid stream, which comprises bringing the fluid stream into contact with an absorption medium according to any of the preceding claims.

9. The method according to claim 8, wherein the partial pressure of carbon dioxide in the fluid stream is less than 500 mbar.

10. The method according to claim 8 or 9, wherein the fluid stream originates from
a) the oxidation of organic substances,
b) the composting or storage of waste materials comprising organic substances, or
c) the bacterial decomposition of organic substances.

11. The method according to any of claims 8 to 10, wherein the fluid stream is contacted with the absorption medium in a scrubbing column operated in countercurrent flow in the presence of activated carbon present in the interior of the scrubbing column, wherein a discontinuous liquid absorption medium phase develops in the interior of the scrubbing column.

12. The method according to any of claims 8 to 11, wherein the loaded absorption medium is regenerated by
a) heating,
b) expanding,
c) stripping with an inert fluid
or a combination of two or all of these measures.

## Revendications

1. Absorbant pour éliminer des gaz acides d'un flux de fluides, comprenant une solution aqueuse A) d
A) au moins un composé d'amine cyclique présentant exclusivement des groupes d'amine tertiaire, et
B) d'au moins un composé d'amine cyclique présentant au moins un groupe d'amine secondaire stériquement encombré,
la concentration totale de A) + B) valant 10 à 60% en poids.

2. Absorbant selon la revendication 1, le rapport pondéral de A):B) valant 0,5 à 4.

3. Absorbant selon l'une quelconque des revendications précédentes, le composé d'amine cyclique A) présentant un cycle de 5 à 7 chaînons de formule générale I, 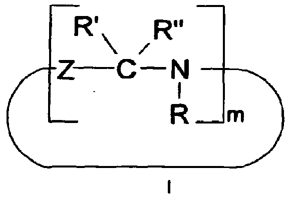 dans laquelle m vaut 1, 2 ou 3, R représente C₁-C₄-alkyle ou C₂-C₄-hydroxyalkyle ou, pour le cas où m vaut 2, deux radicaux R peuvent former ensemble un pont C₂-C₃-alkylène ; R' représente H, C₁-C₄-alkyle ou C₂-C₄-hydroxyalkyle ; R" représente H ou C₁-C₄-alkyle ; Z représente une liaison ou C₁-C₆-alkylène.

4. Absorbant selon la revendication 3, le composé d'amine cyclique A) étant choisi parmi :
la triéthylènediamine, la 1-hydroxyéthylpipéridine, la bis(hydroxyéthyl)pipérazine, la N,N'-diméthylpipérazine et le 1-méthyl-2-pyrrolidine-éthanol.

5. Absorbant selon l'une quelconque des revendications précédentes, le composé d'amine cyclique B) présentant la formule générale II 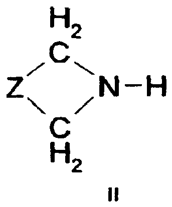 dans laquelle Z représente C₂-C₄-alkylène, qui est le cas échéant interrompu par O ou par un groupe NR"', R"' représentant H, C₁-C₄-alkyle ou C₂-C₄-hydroxyalkyle, et qui est le cas échéant monosubstitué ou polysubstitué par C₁-C₄-alkyle ou C₂-C₄-hydroxyalkyle.

6. Absorbant selon la revendication 5, le composé d'amine cyclique B) étant choisi parmi la pipérazine, l'homopipérazine, la 1-hydroxyéthylpipérazine, la 4-hydroxyéthylpipéridine, la 1-méthylpipérazine et la 2-méthylpipérazine.

7. Absorbant selon l'une quelconque des revendications précédentes, comprenant une solution aqueuse
A) de 1-hydroxyéthylpipéridine et/ou de triéthylènediamine ; et
B) de pipérazine.

8. Procédé pour éliminer des gaz acides d'un flux de fluides, dans lequel on met en contact le flux de fluides avec un absorbant selon l'une quelconque des revendications précédentes.

9. Procédé selon la revendication 8, la pression partielle de dioxyde de carbone dans le flux de fluides étant inférieure à 500 mbars.

10. Procédé selon la revendication 8 ou 9, le flux de fluides provenant
a) de l'oxydation de substances organiques,
b) du compostage ou de l'entreposage de déchets contenant des substances organiques, ou
c) de la décomposition bactérienne de substances organiques.

11. Procédé selon l'une quelconque des revendications 8 à 10, le flux de fluides étant mis en contact dans une colonne de lavage exploitée à contre-courant, en présence de charbon actif se trouvant à l'intérieur de la colonne de lavage, avec l'absorbant, une phase d'absorbant liquide discontinue se formant à l'intérieur de la colonne de lavage.

12. Procédé selon l'une quelconque des revendications 8 à 11, dans lequel on régénère l'absorbant chargé par
a) chauffage,
b) détente,
c) extraction avec un fluide inerte
ou une combinaison de deux ou de toutes ces mesures.
